# EUROPEAN PATENT APPLICATION

(11) **EP 3 144 560 A1**
(43) Date of publication of application: **22.03.2017**
(21) Application number: 15186128.3
(22) Date of filing: 21.09.2015
(51) Int. Cl.: F16G 13/06, F16H 7/06

(54) **CHAIN DRIVE**

(71) Applicant: Korse, Theodorus Henricus Johannes Carolina, 2724 CJ Zoetermeer (NL)
(72) Inventor: Korse, Theodorus Henricus Johannes Carolina, 2724 CJ Zoetermeer (NL)
(74) Representative: De Vries & Metman

(57) **Abstract**

Chain drive comprising
- a bush chain with chain links having link plates,
- a sprocket wheel
- the link plates have a support nose that extends towards the sprocket center, the support nose has a convex support surface with a nose curvature radius and in a support point the convex support surface is at a maximum support distance from the link center line and
- in the planes of the link plates at both sides of the sprocket teeth is a support plate with concave support surfaces and when approaching the sprocket wheel the convex support surfaces interact with the concave support surfaces to control the position of the forward aperture center relative to a tangent line to the pitch circle.

In accordance with the invention the nose curvature radius is in the support point larger than 30% of the maximum support distance.

## Description

The invention concerns a chain drive in accordance with the preamble of claim 1. Such a chain drive is known from US 2199292. This document describes a heavy duty drive chain and the interaction of the chain with the driving sprocket wheel. In the standard bush chain this interaction starts with a destructive impact or shock at the moment that the bush runs into the bush cavity of the driving sprocket wheel. The described invention aims to eliminate this destructive shock.

In the drive chain disclosed in US 2199292 the support nose consists of a semi-cylindrical extremity with constant radius over a circumference of almost 180 degrees. The support plate has a support cavity that interacts with the semi-cylindrical extremity of the chain.

Although the chain was designed for heavy duty, calculation of the design reveals that the allowable load is insufficient and that the desired heavy duty cannot be obtained. As the advantage of the eliminated destructive shock remains desirable the object of the invention is to increase the allowable load. Document WO 2007071782 also describes a chain transmission with a link plate with a support nose in front of the forward aperture center. In this design the convex support surface of the support nose interacts with the convex support surface of the support plate, which leads to a small Hertz contact radius and to relatively high Hertz contact stress.

In accordance with the invention the chain drive is in accordance with claim 1. It has been found that the allowable load depends on the Hertz contact stress during the interaction of the convex support surface and the concave support surface and for a specific allowable Hertz contact stress on the Hertz contact radius in the contact point. This Hertz contact radius depends on the curvature radius of the convex support surface and the curvature radius of the concave support surface and is equal to the product of the curvature radius of the concave support surface and the curvature of the convex curvature radius divided by the difference of the curvature radius of the concave support surface and the curvature radius of the convex support surface. Increasing the curvature radius of the convex support surface also leads to an increased curvature radius of the concave support surface, but this increase is less. This leads to a decrease of the difference between the contact radii of the convex support surface and the concave support surface and to a strong increase of the Hertz contact radius. In the chain drive according to claim 1 the increased nose curvature radius of the convex support surface gets a value that is slightly smaller than the curvature radius of the concave support surface and this leads to a large Hertz contact radius between the convex and concave support surfaces, for instance to more than 2 to 4 times the Hertz contact radius as can be calculated for the design known from US 2199292. This increased Hertz contact radius also leads to 2 to 4 times increase in the allowable load.

In accordance with an embodiment of the invention the chain drive is in accordance with claim 2. In this way the length of the convex support curve of the support nose in front of the link plate is reduced so that there is sufficient clearance between the support nose and a rear side of the link plate in front of it and interference is prevented.

In accordance with an embodiment of the invention the chain drive is in accordance with claim 3. In this way, the width of the link plates can be increased without creating interference of the link plates with the support plate and a higher load is possible. The reduced addendum radius might lead to a reduction of the length of the concave support curve near the convex curvature start and a later interaction between the convex support surface and the concave support surface, but it has been found that this is allowable as it has only a limited influence on noise and/or vibration of the chain.

In accordance with an embodiment of the invention the chain drive is in accordance with claim 4. In this way, the reduced support radius at the start of the interaction limits the dimension of the support nose. At the end of the interaction between the convex and the concave support surfaces the increased nose contact radius has its maximum value and as a consequence the Hertz contact radius has its maximum value as well. This is advantageous as at the end of the interaction the contact force between the link plate and the support plate also has its maximum value and the increased Hertz contact radius limits the Hertz contact stress. In this way the support nose can be designed in such a way that the contact stress remains more or less at a constant value during the interaction. In accordance with an embodiment of the invention the chain drive is in accordance with claim 5. In this way, the arc angle of the convex support surface is smaller but due to the increased nose curvature radius the arc length remains about the same. This allows higher loads without increasing the dimensions of the support nose so that interference with the rear side of the link plate in front of the support nose and/or interference with the tooth addendum of the support plate is avoided. It has been found that limiting the rotation angle over which the sprocket wheel rotates during the interaction between the convex and concave support surface to a fraction of the pitch angle already brings a major improvement above a traditional bush chain.

For instance if the dynamic effects are neglected and only geometrical or kinematic effects are taken into account, the amplitude of the vibrations is reduced to 4%, or to 12% or to 25% of the vibrations in an unsupported bush chain and also the impact of the bush on the sprocket wheel is less.

In accordance with an embodiment of the invention the chain drive is in accordance with claim 6. In this way, the link plates follow an almost straight path and vibrations of the link plates are strongly reduced.

In accordance with an embodiment of the invention the chain drive is in accordance with claim 7. In this way, it is possible to increase the nose curvature radius and to increase the resistance to wear of the support nose without increasing the dimension of the support nose and interference of the support nose with the preceding link plate is avoided.

In accordance with an embodiment of the invention the chain drive is in accordance with claim 8. In this way, the support nose has a shorter convex support surface and as the convex support surface interacts only with the concave support surface, reducing the length of the convex support surface leads to a shorter concave support surface. The shorter concave support surface leads to a smaller addendum radius of the support plate and makes it possible to increase the width of the link plate and thereby increasing the load bearing capacity of the chain.

In accordance with an embodiment of the invention the chain drive is in accordance with claim 9. In this way, the sprocket wheel and support plates are made in one step and/or of one piece so that a too large tolerance offset between the bush cavities of the sprocket wheel and the concave support surfaces of the support plates is avoided.

In accordance with an embodiment of the invention the chain drive is in accordance with claim 10. In this way, the support plates can be made accurately at low costs.

In accordance with an embodiment of the invention the chain drive is in accordance with claim 11. In this way, the sprocket teeth fit between the support noses of side by side link plates and the centering edge of the sprocket teeth is at a reduced radius but at a sufficient radius for proper centering of the chain on the sprocket. This prevents collisions of the support nose with the sprocket teeth.

Hereafter various embodiments illustrate the invention using drawings in which
Figure 1 shows a schematical side view of a link plate of a chain according to the invention with two bushes supported in bush cavities of a sprocket wheel, the link plate has a support nose with three different nose curvature radii,
Figure 2 shows a graph of the value of the Hertz contact radius divided by the pitch distance in dependence of the quotient of the nose curvature radius of the link plates according to figure 1 and the maximum support distance,
Figure 3 shows a schematical side view of a support nose and the convex support surface according to the prior art,
Figure 4 shows a part of a schematical side view of an embodiment of an inventive link plate as shown in figure 1 together with a sprocket wheel and a support plate rotating with the sprocket wheel and a preceding link plate,
Figure 5 shows in six positions during rotation of the sprocket wheel a side view of the interaction of four links with link plates as shown in figure 4 with the sprocket wheel and the support plate rotating with the sprocket wheel,
Figure 6 shows in a side view the interaction of the support nose of figure 4 with a support plate that is designed such that the bush cavity starts supporting the bush before the forward aperture center has arrived in a tangent point,
Figure 7 shows in a graph three embodiments of the curvature radius of the convex support surface in dependence of the rotation angle of the sprocket wheel divided by the pitch angle and the corresponding Hertz contact radius during the interaction with the concave support surface, and
Figure 8 shows the interaction of the chain with the sprocket wheel and the sprocket wheel in cross section according to the prior art and according to the invention.

In the description components and parts that are used in the various embodiments may have the same name and/or reference number if they have the same or similar function.

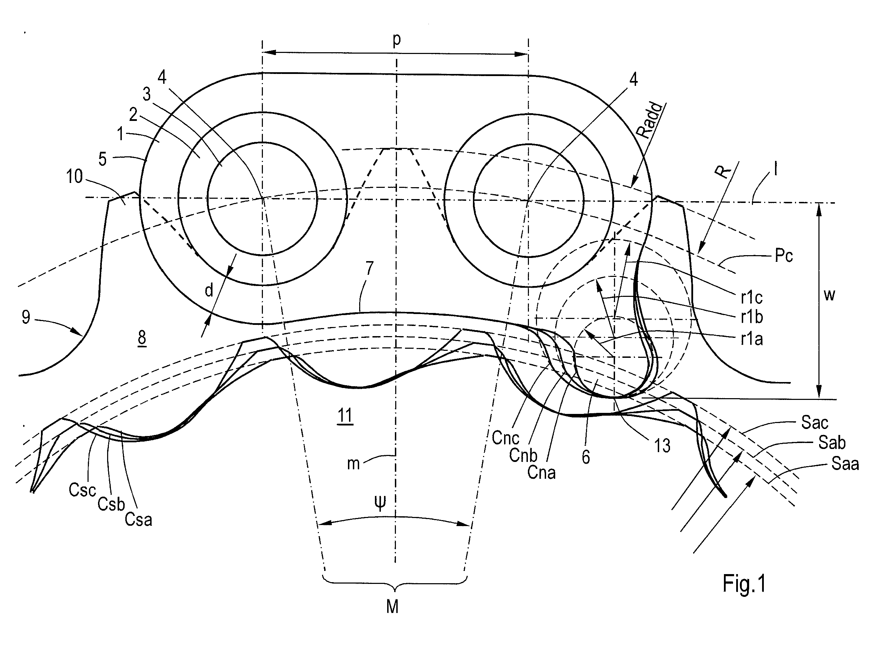

The invention concerns a chain drive with a bush chain. Figure 1 shows a link of the bush chain, the link comprises a link plate 1 and two bushes 2 that are mounted in apertures with an aperture center 4 in the link plate 1. The aperture centers 4 are at a pitch distance p on a link center line l. Each bush 2 is mounted in two link plates 1, these link plates 1 are mounted side by side and the two bushes 2 and the two link plates 1 form the chain link. The chain links are coupled by link plates similar to link plates 1 and coupling pins 3 that are mounted in the bushes 2. The link plates 1 in which the bushes 2 are mounted are called inner link plates, the link plates that connect the bushes 2 with coupling pins 3 are called outer link plates.

In the chain drive some chain links of the bush chain are looped around a sprocket wheel and a straight part of the bush chain is under tension between two sprocket wheels. Figure 1 shows the chain link mounted on a sprocket wheel 8 with sprocket teeth 10 with a tooth center line m and bush cavities 9. The sprocket wheel 8 has a sprocket center M and the outer radius of the sprocket teeth 10 is a sprocket addendum radius Radd. Two bush cavities 9 support the two bushes 2 of the chain link and the aperture centers 4 are on a pitch circle Pc with a pitch circle radius R. The sprocket wheel 8 has z sprocket teeth 10 and a pitch angle ψ. In this embodiment a number of sprocket teeth z is z=18; this is the usual minimum number of teeth z for a sprocket wheel 10 and the invention is most suitable for use in chain drives with sprocket wheels that have the minimum number of teeth z. Unless otherwise indicated the sprocket wheels 8 in the hereafter shown embodiments have this minimum number of teeth z, as this minimum number of teeth z is most relevant for the design of the chain drive. Other number of teeth z are possible and the design can be amended easily for a different minimum number of teeth z.

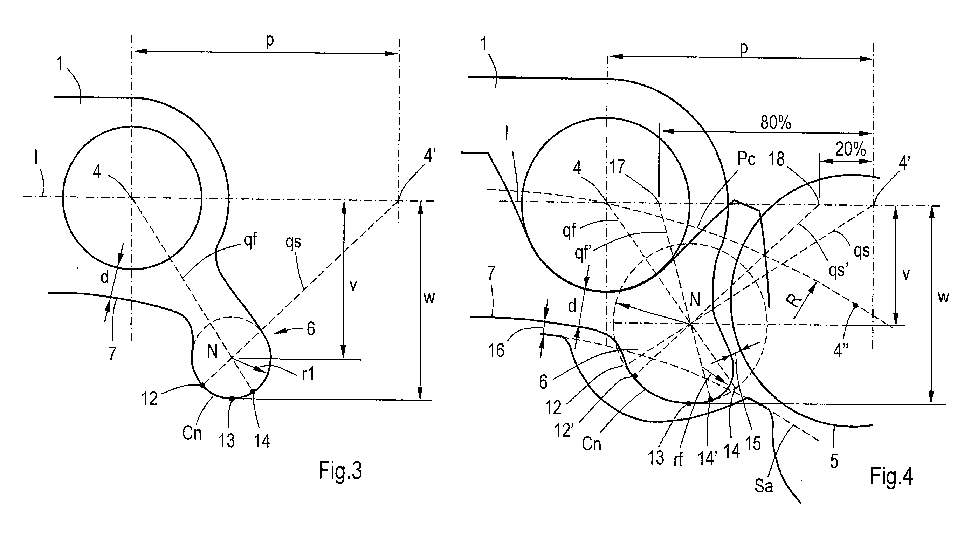

The inner link plates and the outer link plates have the same outer shape. The link plates 1 have in front of the forward aperture center 4 and directed towards the sprocket center M a support nose 6. In a support point 13 at the largest distance from the center line 1 the distance from the center line 1 is a maximum support distance w. In the shown embodiment the maximum support distance w is approximately 70% of the pitch distance p, and it is at least more than 60% of the pitch distance so that the support point 13 is well below the inner curvature 7 of the chain link 1. The support nose 6 is designed such that when mounted around the sprocket wheel 8 a rear side 5 of the preceding link plate 1 remains free from the support nose 6 (see figure 4). The link plate 1 has an aperture in which the bush 2 is mounted and this aperture forms with the outer circumference of the link plate 1 a remaining cross section of the link plate 1. This cross section is indicated with a link strength section d between the aperture of the bush 2 and the rear side 5 of each link plate 1 and/or an inner curvature 7 at the underside of the link plate 1 and this cross section determines the strength of the link plate 1 and thereby the maximum load that the chain can carry.

The support nose 6 has a convex support surface Cn that interacts with a concave support surface Cs of a support plate 11 that is attached to or is part of the sprocket wheel 8. The width of the support plate 11 is sufficient to support both the inner links and the outer links.

Figure 1 shows three embodiments of the support nose 6 and the convex support surface Cna, Cnb and Cnc, all having the same maximum support distance w. The convex support surface Cna has in the support point 13 a nose curvature radius r1a, which is equal to 0.2 times the maximum support distance w. This is the same value as known from the prior art of US 2199292 and as in this prior art document the whole convex support surface Cna has the same curvature radius r1a. The convex support surface Cna cooperates with the concave support surface Csa in such a way that the aperture centers 4 follow a straight line that is a tangent line t to the pitch circle Pc, as described in US 2199292. The concave support surfaces Csa form cavities and teeth in the outer circumference of the support plate 11 and these teeth have an outer circumference on a support plate addendum circle Saa.

The convex support surface Cnb has in the support point 13 a nose curvature radius r1b, which is equal to 0.3 times the maximum support distance w and the convex support surface Cnb has a constant curvature radius r1b and interacts with the concave support surface Csb in such a way that the aperture centers 4 follow a straight path. The concave support surfaces Csb form cavities and teeth in the outer circumference of the support plate 11 and these teeth have an outer circumference on a support plate addendum circle Sab.

The convex support surface Cnc has in the support point 13 a nose curvature radius r1c, which is equal to 0.4 times the maximum support distance w and the convex support surface Cnc has a constant curvature radius r1c and interacts with the concave support surface Csc in such a way that the aperture centers 4 follow a straight path. The concave support surfaces Csc form cavities and teeth in the outer circumference of the support plate 11 and these teeth have an outer circumference on a support plate addendum circle Sac.

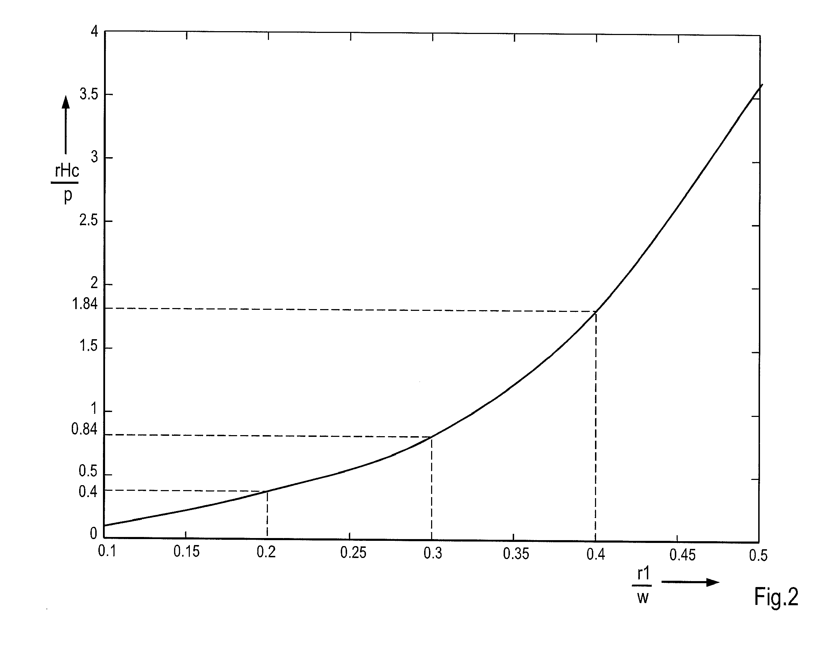

For the interaction in the support point 13 of the convex support surface Cn with the nose curvature radius r1 and the concave support surface Cs a curvature radius of the concave support surface Cs can be calculated in an approximating analysis. In a numerical simulation analysis the curvature radii of the other points of the concave support surface Cs can be estimated. It appears that the curvature radius of the concave support surface Cs in the support point 13 is only for a small fraction dependent on the nose curvature radius r1 and mainly depends on the maximum support distance w. The curvature radius of the concave support surface Cs in the support point 13 can be calculated and based on this calculation a Hertz contact radius rHc can be calculated. Figure 2 shows a graph of the result of the approximate calculation of the Hertz contact radius rHc in dependence of the quotient of the nose curvature radius r1 and the maximum support distance w for a specific support distance w. The graph shows in interrupted lines the quotient of the Hertz contact radius rHc and the pitch distance p for the three embodiments shown in figure 1. It shows that an increase of the nose curvature radius r1 as known from US 2199292 with 50% leads to more than doubling the Hertz contact radius rHc; doubling the nose curvature radius r1 of US 2199292 leads to more than four times the Hertz contact radius rHc of the prior art. This means that for a specific allowable Hertz contact stress the four times increased Hertz contact radius leads to a four times increased allowable contact force and thus also to a four times increased allowable chain load.

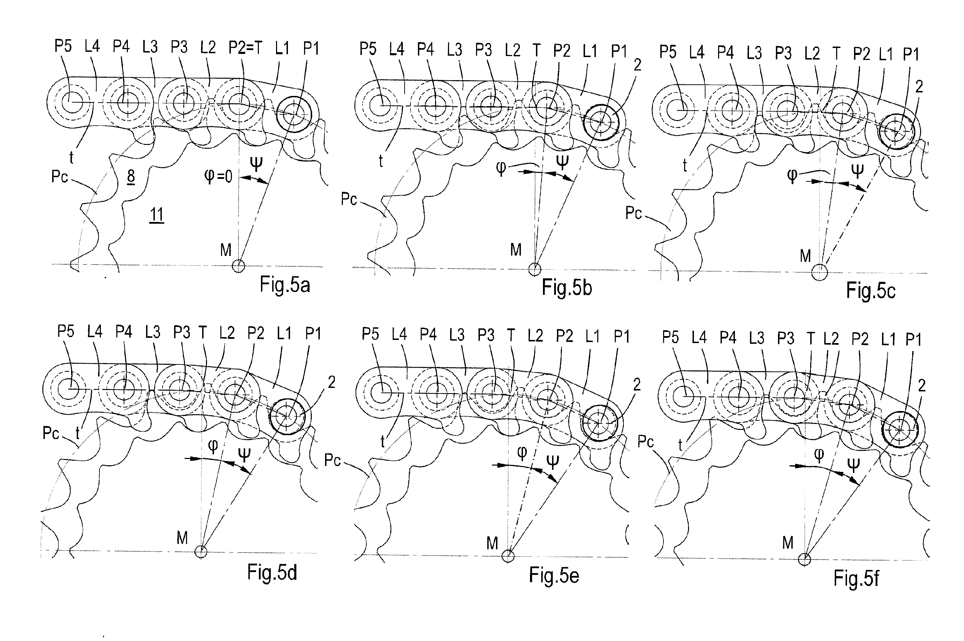

Figure 3 shows in more detail the link plate 1 according to the prior art with more specific the support nose 6 with the convex support surface Cn. The convex support surface Cn has a constant nose curvature radius r1 with a nose curvature center N that is at a curvature center distance v from the link center line l. When the link plate 1 that is in the straight part of the chain approaches the sprocket wheel 8 during the rotation of the sprocket wheel 8, the link center line 1 is on a tangent line t that is tangent to the pitch circle Pc (see figure 5) of the sprocket wheel 8. The tangent line t ends on the pitch circle Pc in a tangent point T; during rotation of the sprocket wheel 8 the tangent line t and all link plates with the center line 1 on the tangent line t rotate around the tangent point T relative to the sprocket wheel 8. The link plate 1 has an extended forward aperture center 4', which is on the link center line 1 at a pitch distance p in front of the forward aperture center 4 of the link plate 1. When the extended forward aperture center 4' is in tangent point T, link plate 1 starts also rotating relative to the preceding link plate 1 and the interaction between the convex support surface Cn and the concave support surface Cs starts; this interaction ensures that the center line 1 with the aperture centers 4 remain on the tangent line t. During further movement of the link plate 1 to the sprocket wheel 8 the tangent point T moves along the center line 1 from point 4'to point 4 (see figure 3). A convex curvature start 12, which is on the convex support surface Cn, the nose curvature center N and the forward aperture center 4' are on an interaction start reference line qs. The interaction start reference line qs is perpendicular to the convex support surface Cn. The interaction of the convex support surface Cn with the concave support surface Cs ends in a convex curvature finish 14, which is on the convex support surface Cn. The convex curvature finish 14, the nose curvature center N and the forward aperture center 4, which equals the position of the tangent point T, are on an interaction finish reference line qf. The interaction finish reference line qf is perpendicular to the convex support surface Cn.

Figure 4 shows a half of a link plate 1 with a support nose 6 that is an embodiment of the link plate 1 as shown in figure 1 with both aperture centers on the pitch circle Pc with a large nose curvature radius r1. The figure 4 shows the position of the support nose 6 relative to the rear side 5 of the preceding link plate 1 that has both aperture centers 4'' on the pitch circle Pc (only one aperture center 4'' shown). The distance between the rear side 5 and the nose 6 is a front play 15, the requirement of a sufficient large front play 15 determines the shape of the support nose 6 and thereby also of the convex support surface Cn. In order to obtain sufficient front play 15 in the shown embodiment the convex curvature Cn ends earlier in convex curvature finish 14' and possibly a front fillet with a front fillet radius rf forms a transition between the convex curvature Cn and a front of the support nose 6 of link plate 1. The convex curvature finish 14' is on an interaction finish reference line qf' that ends in an early interaction finish point 17 on link center line l.

The early interaction finish point 17 is at a distance of 80% of p from the forward aperture center 4' on center line l. The early interaction finish point 17 coincides with the tangent point T after a relative rotation angle ϕ of the sprocket wheel 8 over 80% of the pitch angle ψ after the relative rotation of the link plate 1 and the preceding link plate 1 started (see figure 5). In the shown embodiment the early interaction finish point 17 is at a rotation angle of ϕ of 80% of the pitch angle ψ, this value may be chosen different for other situations, for instance at a rotation angle ϕ of 90% of the pitch angle ψ in situations with a higher number of sprocket teeth z or at different values of the front fillet radius rf. Also the value can be for instance at a rotation angle ϕ of 70% of the pitch angle ψ. In the shown embodiment of figure 4 the front fillet radius rf is approximately half the value of the nose curvature radius r1. It will be clear that it must be smaller than r1 at the convex curvature finish 14 or 14' and that in some embodiments it might be approximately zero. The function of the front fillet is to make the support nose 6 as small as possible to reduce the chance of interference with the preceding link plate.

Figure 4 shows the support plate addendum circle Sa and an addendum play 16 between the outer circumference of the teeth of the support plate 11 determined by the addendum circle Sa and the inner curvature 7 of the link plate 1. It will be clear that one of the requirements of the chain drive is that the addendum play 16 must be sufficient. A further requirement is that the chain has sufficient strength and this is obtained by increasing the link strength section d. Comparing figure 3 (prior art) and figure 4 shows that an increase in the link strength section d is possible while maintaining sufficient addendum play 16 through reducing the radius of the addendum circle Sa and increasing the width of the link plate 1. The radius of the addendum circle Sa can be reduced by delaying the interaction between the convex support surface Cn and the concave support surface Cs.

In the embodiment of figure 4 the interaction starts in a convex curvature start 12' on the convex support surface Cn, which is on an interaction start reference line qs'; the interaction start reference line qs' starts in a late interaction start point 18, which coincides with the tangent point T after a relative rotation angle ϕ of the sprocket wheel 8 over 20% of the pitch angle ψ after the relative rotation of the link plate 1 and the preceding link plate started. In the shown embodiment the late interaction start point 18 is at a rotation angle ϕ of 20% of the pitch angle ψ, this rotation angle ϕ may be chosen different for other situations, for instance at a rotation angle ϕ of 30% of the pitch angle ψ. Also the rotation angle ϕ can for instance be 10% of the pitch angle ψ.

Figure 5 shows the interaction of links L1, L2, L3 and L4 according to the invention with the sprocket wheel 8 and the support plate 11. Figure 5a shows a first link L1 with hinge points P1 and P2 positioned on the pitch circle Pc and wherein both bushes 2 are in adjacent bush cavities 9 of the sprocket wheel 8. The hinge points P of the link plates 1 indicate the center lines of the hinges connecting the link plate 1. These center lines are formed by the center lines of the coupling pins 3 and the bushes 2 and are in the aperture centers 4. The hinge points P2, P3, P4 and P5 of the following links L2, L3 and L4 are on the tangent line t that is tangent to the pitch circle Pc. The tangent point T, that is the end of the tangent line t, is the intersection of the tangent line t and the pitch circle Pc and in figure 5a the hinge point P2 and the tangent point T coincide. From the sprocket center M the angle between the radials to the hinge points P of a link L is the pitch angle ψ. A rotation angle ϕ, that is smaller than the pitch angle ψ, indicates the various steps of the interaction of a link plate with the sprocket wheel 8 and the support plate 11 during rotation of the sprocket wheel 8. In figure 5a the rotation angle ϕ is zero; in figure 5b the rotation angle ϕ is approximately 1/6*ψ; in figure 5c the rotation angle ϕ is approximately 1/3*ψ; in figure 5d the rotation angle ϕ is approximately 1/2*ψ; in figure 5e the rotation angle ϕ is approximately 2/3*ψ; and in figure 5f the rotation angle ϕ is approximately 5/6*ψ.

In figures 5a-f the support nose 6 of link L1 is free from the support plate 11. In figure 5a the support nose 6 of link L2 is free from the support plate 11 before P2 arrived in T and the support nose 6 of link L3 has not yet started its interaction with the support plate 11. In figure 5b the support nose 6 of link L3 will start its interaction with support plate 11 and from figure 5b to 5e only the support nose 6 of link L3 is in interaction with the support plate 11. In figure 5f the bush 2 of hinge point P3 starts interacting with the bush cavity 9 of the sprocket wheel 8 and the support nose 6 is lifted from the support plate 11 and thereby ends the interaction of support nose 6 of link L3 with the support plate 11. It will be clear that the sequence described in the figures 5a-5f continues to repeat itself as long as the sprocket wheel 8 rotates and the chain links are under tension in the direction of the tangent line t away from the tangent point T.

In some embodiments the length of the convex support curve Cn of the support nose 6 in front of the link plate 1 is reduced and a fillet is used. In this way there is sufficient clearance between the support nose 6 and the rear side 5 of the link plate 1 in front of it. As a consequence, after finishing the interaction between the convex support curve Cn of the support nose 6 and the concave contact curve Cs of the support plate 11, the fillet of the support nose with a small radius may take over the interaction between the convex support surface Cn and the concave support surface Cs and hinge point P3 of link L3 may descend below the tangent line t and moves towards the pitch circle Pc. Then the bush of hinge point P3 gets supported by the bush cavity 9 of the sprocket wheel 8. This shock may be reduced if the convex support surface Cn and the concave support surface Cs have been designed such that during the interaction the hinge point P3 does not travel along the tangent line t but along a line slightly below the tangent line t towards the pitch circle Pc.

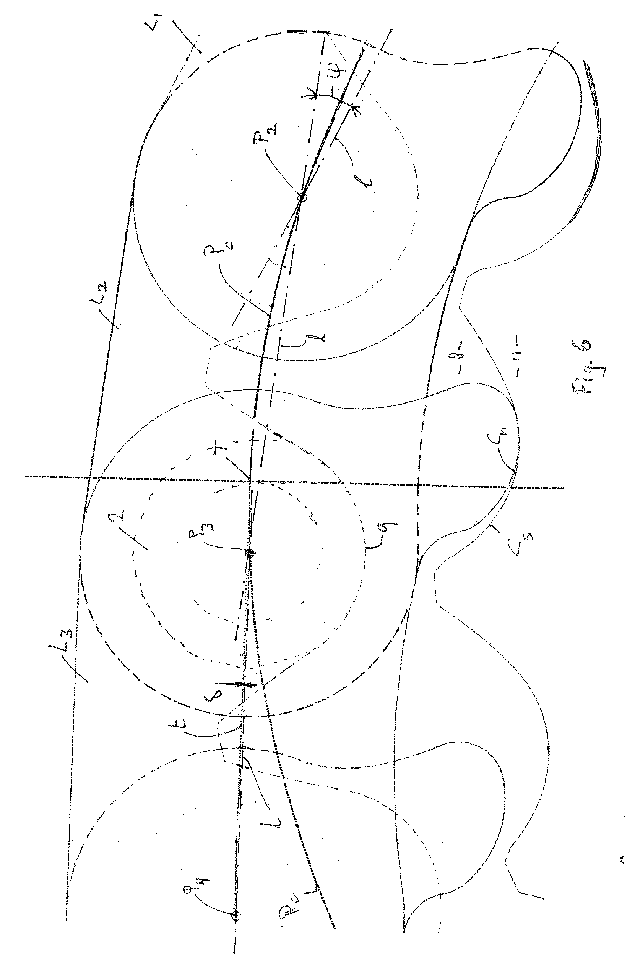

As shown in figure 6, the hinge point P3 reaches the pitch circle Pc for rotation angle ϕ is 80% of the pitch angle ψ, and the hinge point P3 is positioned on the pitch circle Pc and the interaction between the convex support surface Cn and the concave support surface Cs is ended. In this way the fillet is not loaded by a contact force and high contact stress and premature wear is effectively prevented.

Figure 6 shows in detail the path of the hinge points P2, P3 and P4 of the links L2 and L3. In the description of the invention and the paths of the hinge points it must be considered that the kinematic effects due to the rotation speed of the sprocket wheel 8 and the masses of the various components are not taken into account. Hinge point P3 of link L3 is in the position where after a small collision the bush cavity 9 now supports the bush 2; this small collision took place after the hinge point P3 approached the sprocket wheel 8 while the support nose 6 was supported by the support plate 11 and the sprocket wheel 8 rotated further. After this small collision the hinge point P3 starts moving with the sprocket wheel 8 along the pitch circle Pc towards tangent point T. At the moment of the small collision the hinge point P3 was a deviation distance δ from the tangent line t. Also the following hinge points of the chain were at this distance δ from the tangent line t. The movement of the hinge point P3 to the tangent point T reduces the deviation distance δ and this distance is zero when hinge point P3 is in tangent point T, also all further hinge points P3, P4 and P5 are then on the tangent line t. When the hinge point P3 moves past the tangent point T the hinge point P3 follows the pitch circle Pc. The hinge point P4 keeps moving towards the tangent point T and moves away from the tangent line t and the deviation distance δ increases until the support nose 6 of Link L4 starts interacting with the support plate 11. As long as this interaction takes place the shapes of the convex support surface Cn and the concave support surface Cs determine the deviation distance δ. In accordance with the invention the deviation distance δ can have a more or less a constant value during the interaction or changes only slightly in order to avoid vibration of the chain links.

In an embodiment of a standard bush chain without support nose the maximum deviation distance δ in a sprocket wheel with z=18 is approximately 0.044 times the pitch distance p. In embodiments of bush chains as disclosed before, whereby the support nose 6 interacts with a support plate 11 the maximum deviation distance δ is reduced. When the interaction occurs only during 50% of the rotation over a pitch angle ψ and the interaction starts after 25% of the rotation angle ϕ that starts when a hinge point P is in the tangent point T and finishes after 75% of the rotation angle ϕ, the maximum deviation distance δ is reduced to approximately 0.011*p, which is a strong reduction to approximately 25% of the originally occurring vibration. When the interaction occurs during 65% of the rotation over the pitch angle ψ the deviation distance δ is reduced and the maximum deviation distance δ is approximately 0.005*p, which is a reduction to approximately 12% of the vibration without support nose. When the interaction occurs during rotation over 80% of the pitch angle ψ the deviation distance is almost negligible and the maximum deviation distance δ is approximately 0.002*p, this is a reduction to approximately 4% of the vibration occurring without support nose.

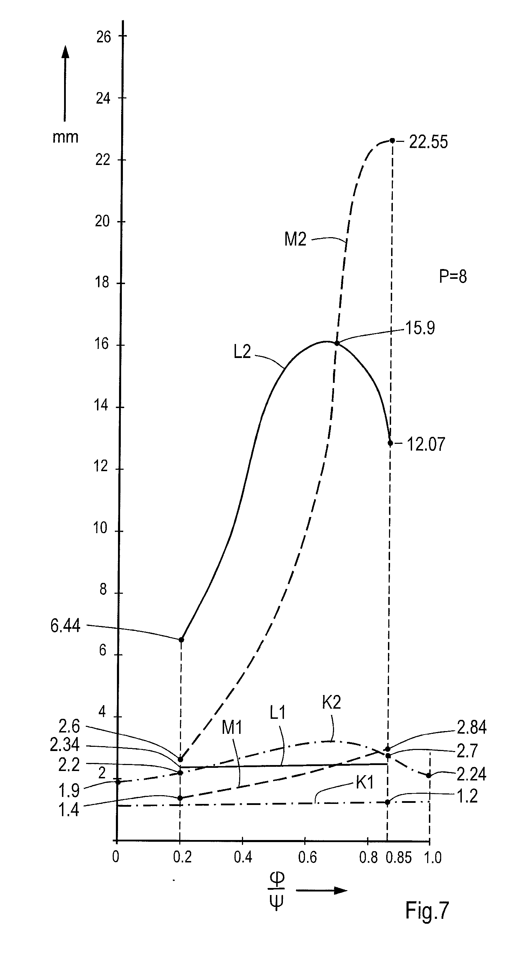

Figure 7 shows for a chain with a pitch distance of p=8mm three embodiments of the chain drive the relation between the curvature radius of the convex support surface Cn and the Hertz contact radius rHc. The curve K1 indicates a constant value of the curvature radius of the convex support surface Cn during the rotation of the sprocket wheel over the pitch angle ψ. In this embodiment, that is similar to the prior art as described in US 2199292 and that was shown in figure 1 with the convex support surface Cna, the nose radius r1 is 1.2mm. After calculating the occurring curvature radii of the concave support surface Cs the Hertz contact radius can be calculated for the various rotation angles; the result of this calculation is shown as curve K2 and this shows a Hertz contact radius rHc ranging from 1.9mm to approximately 3mm.

The curve L1 indicates a second embodiment, this embodiment has a constant value of the curvature radius of the convex support surface Cn during the rotation of the sprocket wheel over the pitch angle ψ. In this embodiment, that was shown in figure 1 with the convex support surface Cnc, the nose curvature radius is 2.3mm. The concave support surface Cs has such a shape that the interaction starts after a rotation angle ϕ of 20% of the pitch angle ψ and finishes after 85% of the rotation. After calculating the occurring curvature radii of the concave support surface Cs the Hertz contact radius can be calculated for the various rotation angles; the result of this calculation is shown as curve L2 and this shows a Hertz contact radius rHc ranging from 6.4mm to approximately 16mm, whereby the highest values of the Hertz contact radii are for the higher rotation angles ϕ. At the higher rotation angles ϕ the load between the support nose 6 and the support plate 11 is higher and due to the higher Hertz contact radii the contact stress will not be considerably higher.

The curve M1 indicates a third embodiment and this embodiment has an increasing value of the curvature radius of the convex support surface Cn during the rotation of the sprocket wheel over the pitch angle ψ. In this embodiment, this curvature radius increases during the interaction from 1.4mm to 2.8mm, whereby the smaller curvature radius applies to the start at a rotation angle ϕ of 20% of the pitch angle ψ. The smaller curvature radius at the start makes it possible to reduce the width of the support nose 6. In this specific case the convex support surface Cn is shaped as an involute. The concave support surface Cs has such a shape that the interaction starts after a rotation angle ϕ of 20% of the pitch angle ψ and finishes after 85% of the rotation. After calculating the occurring curvature radii of the concave support surface Cs the Hertz contact radius can be calculated for the various rotation angles; the result of this calculation is shown as curve M2 and this shows a Hertz contact radius ranging from 2.6mm to approximately 22mm, whereby the highest values of the Hertz contact radii are for the higher rotation angles ϕ. At the higher rotation angles ϕ the load between the support nose 6 and the support plate 11 is higher and due to the higher Hertz contact radii the contact stress will not be higher and can be designed to be approximately constant during rotation.

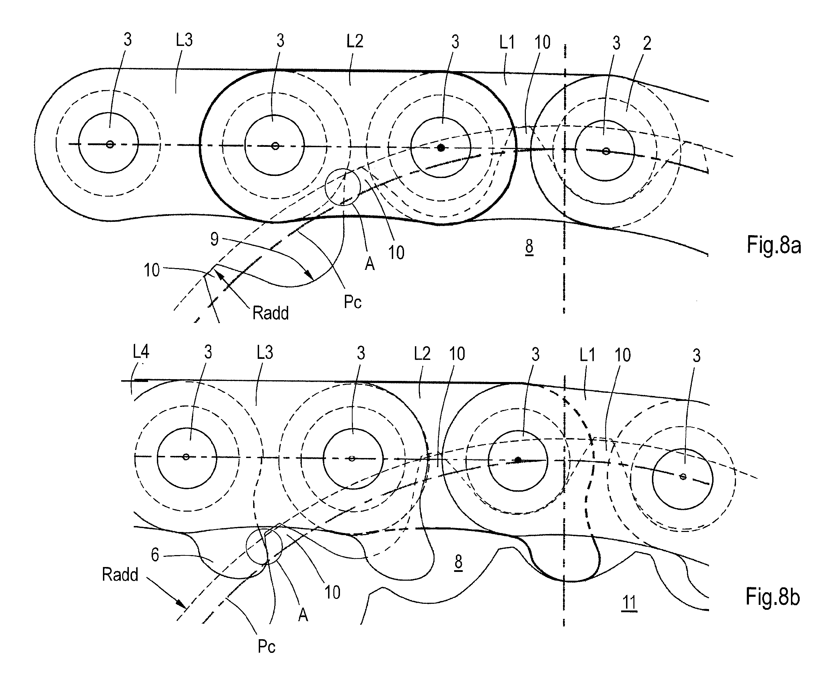

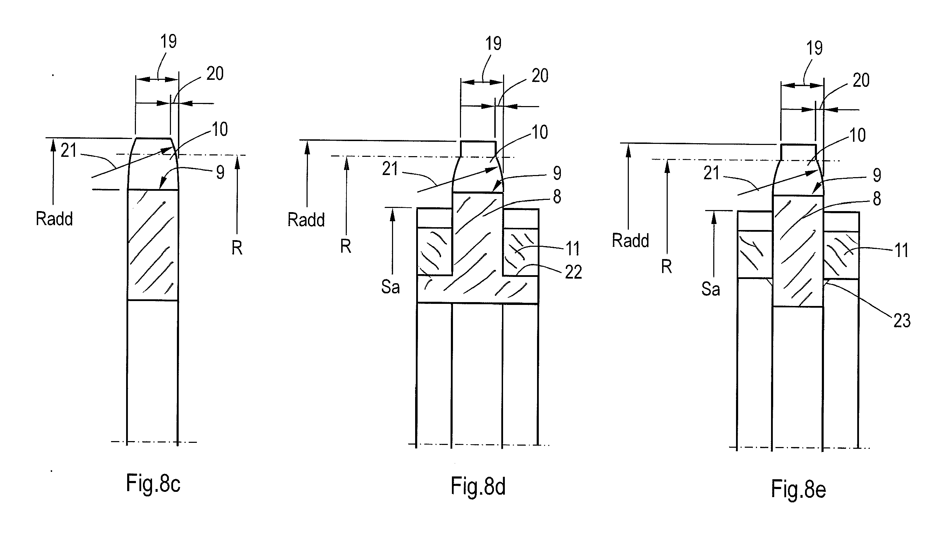

Figure 8 shows in figure 8a link plates L1, L2, L3 of the links of a prior art bush chain that approach a sprocket wheel 8 with a pitch circle Pc with a pitch circle radius R. The link plates L are coupled by coupling pins 3. The sprocket wheel 8 has sprocket teeth 10 and bush cavities 9, the outer circumference of the sprocket teeth 10 has a sprocket addendum radius Radd. In the figure 8a link plates L1 and L3 are inner link plates that are adjacent to the sprocket teeth 10 of sprocket wheel 8. As detail A shows the sprocket teeth 10 starts inserting itself between the link plates L1 at the outer circumference of the sprocket teeth 10 at the sprocket addendum radius Radd. This means that a chamfer profile 21 (see figure 8c) that guides the link plate 1 along the sprocket tooth 10 can start at the outer circumference of the sprocket teeth 10 at the sprocket addendum radius Radd.

Figure 8b shows link plates L1, L2, L3 and L4 of the bush chain according to the invention with support noses 6. In the figure 8b the link plates L2 and L4 are inner link plates that are adjacent to the sprocket teeth 10 of the sprocket wheel 8.

As detail A shows the sprocket tooth 10 starts inserting itself between the support noses 6 of the link plates L4 with the addendum of the sprocket teeth 10 that lies outside the radius R of the pitch circle Pc of the sprocket wheel 8. This means that the chamfer profile 21 (see figure 8d,e) that guides the inner link plates along the sprocket tooth 10 cannot start at the outer circumference of the sprocket tooth 10, but is shifted radially inwards and starts at or near the pitch circle Pc with the pitch circle radius R.

Figure 8c shows a sprocket wheel 8 according to the prior art and as defined in DIN 8196. The sprocket wheel 8 has a sprocket wheel width 19 and the sprocket teeth 10 have at the outer circumference a reduced width. At the sprocket addendum radius Radd there is at each side at a chamfer distance 20 from the side of the sprocket wheel 8 and towards the sprocket center a chamfer profile 21. This chamfer profile 21 guides the inner link plates when the sprocket tooth 10 moves between two adjacent inner link plates and the bush 2 moves into the bush cavity 9.

Figures 8d and 8e show sprocket wheels 8 for link plates 1 with a support nose 6 as according to the invention, whereby the sprocket teeth 10 of the sprocket wheel 8 have at the outer circumference a reduced width with at each side the chamfer distance 20 from the sprocket wheel width 19. This reduction is approximately constant from the addendum radius Radd to the pitch circle radius R and the width of the sprocket teeth 10 increases according to the chamfer profile 21 to the sprocket wheel width 20 from the pitch circle radius R to near the smallest radius of the bush cavity 9. The smaller width of the sprocket teeth 10 outside the pitch radius R ensures that the sprocket teeth 10 of the sprocket wheel 8 do not collide with the side faces of the support noses 6 of the inner link plates 1 and that the chamfer profile 21 guides the support noses 6 along the side faces of the sprocket teeth 10.

Figures 8d and 8e also show the support plates 11 attached at both sides of the sprocket wheel 8, whereby figure 8d shows a press fit 22 between the sprocket wheel 8 and the support plates 11 and figure 8e shows a laser weld 23 between the sprocket wheel 8 and the support plates 11. Positioning pins can also be used. For positioning the support plates 11 in a correct rotative and/or translational position relative to the teeth of the sprocket wheel 8 before welding or press fitting various techniques are possible, such as the use of positioning pins that are clamped around the bush cavities 9 of the sprocket wheel 8 and in support cavities of the support plate 11 or the use of special made calibers or such.

The description mentions chains with chain links and link plates. In the field of bush chains many different embodiments occur. Examples of this are duplex chains, with side by side chain links coupled with a common coupling pin. Also embodiments are included whereby the link plates and bushes are integrated to form a single part, of this US 2199292 shows an example. It is clear that the invention is also applicable for these designs.

In other embodiments the chain plate is symmetrical about the link center line and has two support noses. This embodiment is suitable for uses where the chain may turn left wise or right wise about a sprocket wheel.

It is noted that the earlier described embodiments can be used to drive components such as a camshaft of an internal combustion engine and/or an oil pump. The chain drive may also be used as a part of a tank track or a bulldozer/caterpillar track whereby the link plates are integrated and/or part of the track.

## Claims

1. Chain drive comprising
- a bush chain with chain links having link plates, bushes possibly surrounded by rollers to couple two side by side link plates and coupling pins to couple the chain links,
- a sprocket wheel with a sprocket center, a pitch circle and sprocket teeth with a sprocket width that fits between two side by side link plates and between consecutive sprocket teeth a bush cavity for supporting a bush,
- each link plate has two apertures with an aperture center for fitting a bush or a coupling pin, in the link plates the aperture centers are at a pitch distance on a link center line,
- the link plates have a support nose that extends towards the sprocket center, the support nose has a convex support surface with a nose curvature radius and a projection of the convex support surface on the link centerline is mainly in front of the forward aperture center and in a support point the convex support surface is at a maximum support distance from the link center line whereby the maximum support distance is at least 60% of the pitch distance, and
- in the planes of the link plates at both sides of the sprocket teeth is a support plate with concave support surfaces and when approaching the sprocket wheel the convex support surfaces interact with the concave support surfaces to control the position of the forward aperture center relative to a tangent line to the pitch circle,
**CHARACTERIZED IN THAT**
- in the support point the nose curvature radius is larger than 30% of the maximum support distance, the nose curvature radius might be more than 40% of the maximum support distance.

2. Chain drive in accordance with claim 1 wherein the convex support surface in front of the support point ends with a front fillet that has a fillet radius that is less than 50% of the curvature radius of the convex support surface adjacent to the front fillet.

3. Chain drive in accordance with claim 1 or 2 wherein the support plate has an outer circumference with an addendum radius and the pitch circle has a pitch circle radius, whereby the difference between the pitch circle radius and the addendum radius is more than 0.6 times the pitch distance.

4. Chain drive in accordance with claim 1, 2 or 3 wherein the curvature radius increases from the start of the interaction between the convex support surface and the concave support surface towards the end of the interaction, and the increase might be more than 50%, more than 75% or more than 100% from the curvature radius at the start of the interaction.

5. Chain drive in accordance with claim 1, 2, 3 or 4 wherein the sprocket wheel has a pitch circle and adjacent sprocket teeth are at a pitch angle and wherein the interaction between the convex support surface and the concave support surface is limited to less than 80% of each sprocket wheel rotation over the pitch angle, or to less than 65% or to less than 50%.

6. Chain drive in accordance with claim 5 wherein the convex support surface and the concave support surface are designed such that during the interaction the forward bush moves in an approximately straight line until the forward bush is supported in the bush cavity.

7. Chain drive in accordance with one of the previous claims wherein on the convex support surface the interaction ends in a contact end point and wherein a line through the contact end point and perpendicular to the convex support surface intersects the link center line at a distance of at least 10%, or at least 20% or at least 30% from the forward aperture center.

8. Chain drive in accordance with one of the previous claims wherein on the convex support surface the interaction starts in a contact start point and wherein a line through the contact start point and perpendicular to the convex support surface intersects the link center line at a distance of less than 90%, or at less than 80% or less than 70% from the forward aperture center.

9. Chain drive in accordance with one of the previous claims wherein the sprocket wheel and the support plates form one single part, for instance made by sintering, molding, or similar.

10. Chain drive in accordance with one of the previous claims wherein the support plates are separate plates fastened on the sprocket wheel, for instance by laser welding, gluing or pressing and/or using centering rings with press fit.

11. Chain drive in accordance with one of the previous claims wherein the width of the sprocket teeth outside the pitch circle is constant and smaller than the width of the sprocket wheel and inside the pitch circle the sprocket wheel width increase with diminishing radius to a length that is slightly less than the length of a bush between link plates.
